# FASCICULE DE BREVET EUROPEEN

(11) **EP 0 663 149 B1**
(45) Date de publication et mention de la délivrance du brevet: **07.10.1998**
(21) Numéro de dépôt: 95400078.2
(22) Date de dépôt: 16.01.1995
(51) Int. Cl.: A21B 5/02

(54) **Machine destinée à la fabrication de crêpes enroulables afin de réaliser des cornets à glace**
Maschine zum Herstellen von Pfannkuchen für Eishörnchen
Machine for producing pancakes for ice-cream cones

(30) Priorité: 17.01.1994 FR 9400511
(43) Date de publication de la demande: 19.07.1995
(73) Titulaire: Parisi, Franco, F-34470 Perols (FR)
(72) Inventeur: Parisi, Franco, F-34470 Perols (FR)
(74) Mandataire: Ravina, Bernard

(56) Documents cités:
- DE-A- 2 048 505
- DE-A- 3 836 786
- FR-A- 2 606 972

## Description

La présente invention a pour objet une machine destinée à la fabrication de crêpes enroulables afin de réaliser des cornets à glace.

Il est connu différents dispositifs permettant la réalisation de cuisson automatique de gaufres ou galettes à rouler comportant un plateau circulaire mobile en rotation autour d'un axe horizontal sur lequel ont été disposées des matrices de cuisson en forme de mâchoires et disposées sur le pourtour du plateau circulaire.
Les dites matrices de cuisson sont munies d'un dispositif d'évacuation des produits cuits.

Le dispositif d'évacuation coopère avec les dites matrices en forme de mâchoires dont la mâchoire supérieure pivote vers l'extérieur de la mâchoire inférieure afin de coopérer avec un poinçon de dégagement de la gaufre ou galette resté sur la mâchoire supérieure.

Le brevet DE 3 836 786 décrit une machine à faire les gaufres comprenant un moule en deux parties articulées dont une est nervurée et l'autre est lisse, les deux parties étant articulées.

Le brevet FR 2 606 972 décrit une machine comportant plusieurs moules ou dispositifs de cuisson montés sur un carrousel tournant ou plateau rotatif.

Il s'avère que ce type de dispositif est peu fiable du fait que bien souvent, le produit reste collé à la mâchoire inférieure dû à l'écoulement de pâte sur les bords de ladite mâchoire interdisant le décollement aisé de la gaufre à galette de la mâchoire inférieure.

Il est également connu de réaliser des gaufres ou galettes à rouler en cornet par l'intermédiaire d'un dispositif constitué de deux plaques chauffantes et quadrillées sur l'une desquelles est disposée la pâte avant d'être enserrée par la seconde plaque.

Ce genre de dispositif présente l'inconvénient de ne pouvoir obtenir qu'une seule gaufre ou galette à rouler à la fois.
Afin de remédier à cet inconvénient, l'homme de l'art a alors disposé plusieurs de ces mâchoires sur un carrousel afin d'augmenter le rendement.

Il s'avère alors qu'un tel dispositif est peu pratique à utiliser car l'ouverture des dites mâchoires est manuelle mais également car elles sont dépourvues de tout dispositif de désolidarisation entre la plaque et la gaufre ou galette.

L'objet de la présente invention vise essentiellement mais non exclusivement à remédier à ces différents inconvénients.
A cet effet, la machine destinée à la fabrication de cornets à glace de type gaufre comprend un plan de travail ou carrousel (1) mobile en rotation autour d'un axe (2) sur lequel ont été disposés plusieurs moules (3) à gaufres circulaires et en retrait desquels se trouve un dispositif de distribution de pâte à gaufre (9).
Les différents moules (3) sont disposés sur le pourtour du carrousel (1) et sont chacun constitués en deux parties (6, 4), munies d'un dispositif de cuisson de la pâte, dont l'une est maintenue fixe au carrousel (1) et est nervurée verticalement et horizontalement créant ainsi un quadrillage alors que la seconde partie (4) du moule coopérant avec la première (4) est lisse et articulée en rotation autour d'un axe charnière lui permettant de coopérer par clavetage avec la première partie du moule (4).
La machine se caractérise en ce que le dispositif chauffant de la partie inférieure (4) du moule permet d'obtenir une température de cuis son supérieure à la température de cuisson de la partie supérieure (6) du moule.

D'autres avantages et caractéristiques apparaîtront à la lecture de la description cités à titre d'exemple non limitatifs à laquelle sont jointes les figures suivantes :

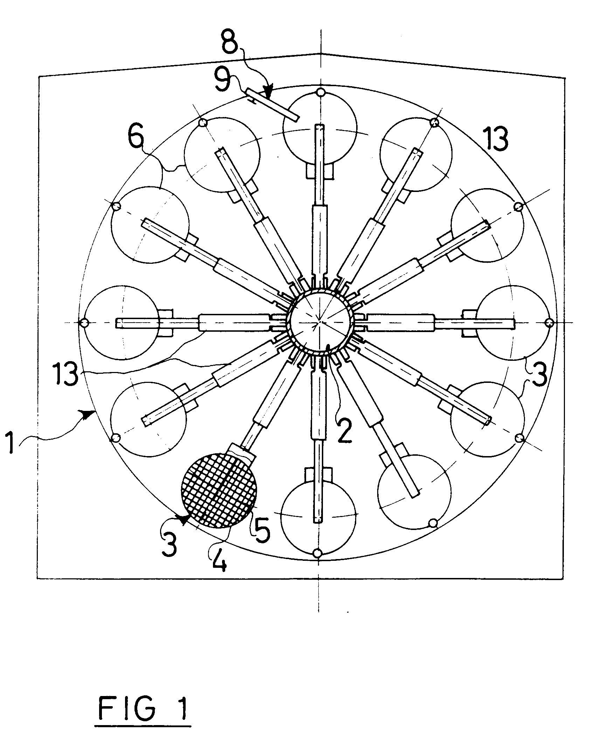

- la figure 1 est une vue de dessus du carrousel et des moules de cuisson,

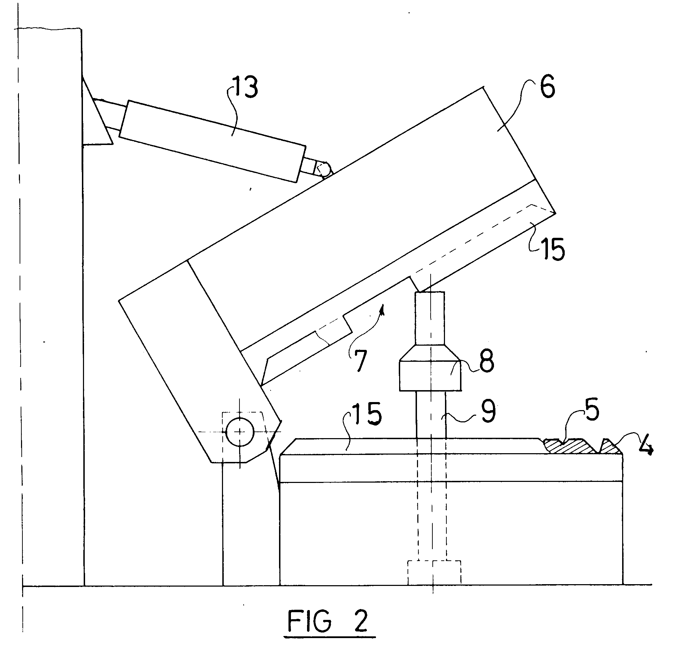

- la figure 2 est une vue de profil d'un des moules,

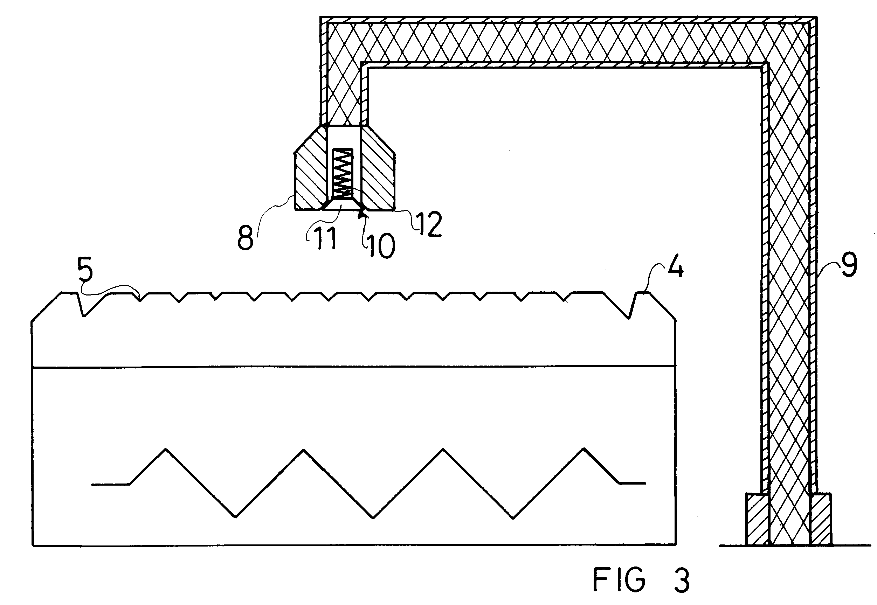

- la figure 3 est une vue en coupe du dispositif distributeur de pâte.

La machine destinée à la fabrication de cornets à glace de type gaufré, comprend un plan de travail ou carrousel 1 mobile en rotation autour d'un axe 2 sur lequel ont été disposés plusieurs moules 3 à gaufres circulaires de type mâchoires.

La partie inférieure 4 de chacun des moules 3 est maintenue solidaire au carrousel 1 et est munie en son âme de nervures 5 verticales et horizontales créant ainsi un quadrillage afin de restituer à la galette un aspect gaufré.

Les différents moules circulaires 3 de type mâchoires sont chacun munis d'un dispositif de cuisson de la pâte.

Chacune des parties du moule 3 en est dotée permettant une cuisson des deux côtés de la galette bien que la partie supérieure 6 du moule ne puisse atteindre la température de la partie inférieure 4 permettant ainsi à la galette de rester collée sur la partie lisse et plane de la mâchoire supérieure 6.

Cette dernière est également dotée d'au moins deux fenêtres d'évacuation 7 de vapeur d'eau qui se dégagent de la pâte lors de sa cuisson.

Au cours du fonctionnement de ladite machine, la pâte est distribuée sur la partie inférieure 4 des différents moules 3 par un dispositif de distribution 8.

Ce dernier est constitué d'un réservoir de pâte associé à une pompe qui, lorsqu'elle rentre en action, alimente un conduit de distribution 9.

Celui-ci est muni en son extrémité d'une soupape d'obturation 10 de la canalisation.
Celle-ci est constituée d'un clapet conique 11 dont la pointe orientée vers le haut et coopérant avec un ressort de rappel 12 ramenant le clapet conique 11 en obturation de la canalisation 9 lorsque la pompe disposée entre le réservoir de pâte et la canalisation s'arrête.

En effet, la pompe lorsqu'elle fonctionne fait monter en pression la pâte dans la canalisation, ce qui provoque un dégagement du clapet et donc l'écoulement de la pâte sur la partie inférieure 4 de l'un des moules.

Une fois que la dose de pâte prévue est sur le moule ou sa partie inférieure 4, la partie supérieure 6 du moule mue par vérin 13 ou tout autre dispositif mécanique ou hydraulique, s'abaisse afin de venir enserré la pâte pour la cuire.

Dans un même temps, l'alimentation du moule suivant s'effectue par l'intermédiaire du carrousel qui, rentré en rotation, amène le moule sous le dispositif de distribution de pâte qui par la pression due à la pompe d'alimentation, déverrouille le clapet 11, provoquant ainsi un écoulement de la pâte.

Après écoulement de la pâte sur le moule et fermeture de ce dernier et suivant un temps de cuisson, le ou les moules 3 s'ouvrent alors un à un afin de libérer la galette et ce, avant réapprovisionnement du moule.

La libération ou désolidarisation de la galette par rapport au moule 3 est due à la différence de cuisson de la galette.

En effet, la température de cuisson de la partie supérieure 6 du moule étant moins importante que celle de la partie inférieure 4, la galette est moins cuite sur sa partie supérieure et adhère donc plus facilement sur la mâchoire supérieure 6 du moule 3 qui est lisse et plane.

Il suffira donc à l'opérateur de décoller la galette pour la rouler sur un cône et ainsi obtenir un cornet à glace.

## Revendications

1. Machine destinée à la fabrication de cornets à glace de type gaufre comprenant un plan de travail ou carrousel (1) mobile en rotation autour d'un axe (2) sur lequel ont été disposés plusieurs moules (3) à gaufres circulaires et en retrait desquels se trouve un dispositif de distribution de pâte à gaufre (9), les différents moules (3) sont disposés sur le pourtour du carrousel (1) et sont chacun constitués en deux parties (6, 4), munies d'un dispositif de cuisson de la pâte, dont l'une est maintenue fixe au carrousel (1) et est nervurée verticalement et horizontalement créant ainsi un quadrillage alors que la seconde partie (4) du moule coopérant avec la première (4) est lisse et articulée en rotation autour d'un axe charnière lui permettant de coopérer par clavetage avec la première partie du moule (4), le dispositif chauffant de la partie inférieure (4) du moule permettant d' obtenir une température de cuisson supérieure à la température de cuisson de la partie supérieure (6) du moule.

2. Machine selon la revendication 1 caractérisée en ce que le dispositif de distribution de pâte (9) est muni d'un doseur antigoutte constitué d'un clapet ou soupape d'obturation (10) de forme conique coopérant avec l'âme du doseur lui-même poussé par la pression de pâte, le clapet (10) se dégageant et permettant ainsi de libérer la pâte est ramené en position par un ressort dynamométrique (12) ou de rappel lorsque la dose souhaitée est écoulée.

3. Machine selon les revendications 1 et 2 caractérisée en ce que les différentes parties des moules (3) sont munies de fenêtres d'évacuation (7) de vapeur d'eau se libérant au cours de la cuisson de la pâte, les moules sont également dotés sur leur périphérie de rebords (15) coopérant en clavetage afin d'éliminer les bavures de pâte interdisant la désolidarisation de la galette obtenue après cuisson de la pâte.

## Claims

1. Machine intended for the manufacture of ice-cream cornets of the wafer type comprising a work surface or carousel (1), which can move in rotation about an axis (2), on which have been arranged several circular wafer moulds (3), set back from which is a device for distributing wafer dough (9), the various moulds (3) are arranged on the periphery of the carousel (1) and each consist of two portions (6, 4), provided with a device for baking the dough, one of which is held in a fixed position on the carousel (1) and has vertical and horizontal ribs thus creating a criss-cross pattern, while the second portion (6) of the mould, co-operating with the first (4), is smooth and articulated so as to rotate about a hinge pin allowing it to co-operate by keying with the first portion of the mould (4), the heating device of the lower portion (4) of the mould making it possible to obtain a baking temperature greater than the baking temperature of the upper portion (6) of the mould.

2. Machine according to Claim 1 characterised in that the device for distributing dough (9) is provided with an anti-drip dispenser constituted by a poppet-valve or stop-valve (10) of conical shape co-operating with the core of the dispenser itself impelled by the pressure of the dough, the poppet-valve (10) becoming disengaged and thus making it possible to release the dough is returned to its position by a dynamometric spring (12) or a return spring when the desired amount has flowed through.

3. Machine according to Claims 1 and 2 characterised in that the different portions of the moulds (3) are provided with discharge windows (7) for water vapour released during the baking of the dough, the moulds are also provided on their periphery with rims (15) co-operating by keying so as to eliminate overflows of dough preventing the biscuit obtained from being released after baking of the dough.

## Patentansprüche

1. Maschine zum Herstellen von Waffeltüten für Speiseeis mit einer Arbeitsebene oder Karussel (1), das um eine Achse (2) drehbar ist, auf dem mehrere kreisrunde Waffelformen (3) angeordnet sind, und demgegenüber zurückgezogen sich eine Waffelteig-Abgabevorrichtung (9) befindet, wobei die verschiedenen Formen (3) am Umfang des Karussels (1) angeordnet sind und jede aus zwei Teilen (6, 4) bestehen, die mit einer Vorrichtung zum Backen des Teigs versehen sind, von denen der eine fest am Karussel (1) gehalten und vertikal und horizontal gerippt ist, um so ein Quadratmuster zu bilden, während der mit dem ersten Formteil (4) zusammenwirkende zweite Formteil (6) glatt ist und um eine Scharnierachse drehbar angelenkt ist, wodurch er durch Aufklappen mit dem ersten Formte (4) zusammenwirken kann, wobei die Heizvorrichtung des unteren Formteils (4) es ermöglicht, daß diese eine höhere Backtemperatur als die Backtemperatur des oberen Formteils (6) erreicht.

2. Maschine nach Anspruch 1, **dadurch gekennzeichnet, daß** die Waffelteig-Abgabevorrichtung (9) mit einer Tropfen verhindernden Dosiervorrichtung versehen ist, die aus einer kegelförmigen Verschlußklappe oder einem Ventilkegel (10) besteht, der mit der Seele der Dosiervorrichtung selbst zusammenwirkt und durch den Druck des Waffelteigs beaufschlagt ist, so daß der Ventilkegel (10) abhebt und so den Teigdurchlauf freigibt, und durch eine dynamometrische Feder (12) oder Rückstellfeder in seine Schließposition zurückgebracht wird, wenn die gewünschte Teigdosis ausgelaufen ist.

3. Maschine nach den Ansprüchen 1 und 2, **dadurch gekennzeichnet, daß** die verschiedenen Teile der Waffelformen (3) mit Austrittsfenstern (7) für den im Verlauf des Backens des Teiges entwickelten Wasserdampf versehen sind und daß die Formen außerdem an ihrem Umfang mit Randleisten (15) versehen sind, welche keilartig zusammenwirken um Teigränder zu beseitigen, welche die Ablösung des erhaltenen Waffelkuchens nach dem Backen des Teigs verhindern würden.
